Europäisches Patentamt

(19) European Patent Office

Office européen des brevets

(11) Publication number: **0 013 260**
A1

(12) # EUROPEAN PATENT APPLICATION

(21) Application number: **79830013.3**

(22) Date of filing: **10.05.79**

(51) Int. Cl.³: **B 29 F 1/12**
**A 43 D 65/02**
**//A43B23/24**

(30) Priority: **22.12.78 IT 5243778**

(43) Date of publication of application:
**09.07.80 Bulletin 80/14**

(84) Designated Contracting States:
**BE CH DE FR GB LU NL SE**

(71) Applicant: **CI.DA. Industria Materie Plastiche di Ciamarra Dario**
**Contrada S. Vitoria**
**I-63017 Porto S. Giorgio(IT)**

(72) Inventor: **Ciamarra, Dario**
**Contrada S. Vittoria**
**I-63017 Porto S. Giorgio(IT)**

(74) Representative: **Fiammenghi, Carlo Avv. et al,**
**Via Quattro fontane, No. 31**
**Rome(IT)**

(54) **Method and mould for producing a shoe with a sole made of plastics of at least three colours.**

(57) A method and a mould for producing the sole (2) of a shoe made of a mouldable plastic material of at least three different colours in which the main body (4) of the sole (2) is made of a first coloured plastics, the outsole (5) of a second differently coloured plastics, while on the side outer surfaces during the first moulding step laminar pieces (6) are inserted of different colour or colours and of any desired outline or contour.

EP 0 013 260 A1

FIG.1

iMG/mvb/805E

- 1 -

## Method and mould for producing a shoe with a sole made of plastics of at least three colours

This invention relates to a method and a mould for producing a shoe sole or a shoe with a sole made of plastics or other suitable elastomeric materials, obtained in at least three different colours by a moulding process. Methods and moulds are well known in the art for producing shoes or shoe soles, in which these soles are obtained by plastics of two different colours, by a moulding process. This invention provides a method and a mould for obtaining a sole made of plastics or the like of three or more different colours, the third and the other colours being obtained by means of laminar pieces sheared from a web or webs of plastic materials of the same chemical structure but of colours different from those of plastic material used for moulding the main portion of the sole, which is of the first colour, said laminar pieces being shaped with any desired outline or contour and being designed to be received in complementary side recesses arranged on the inner side surface of the mould, so that, after the first moulding step, said differently coloured laminar pieces will be bonded together with the main body of the sole,

- 2 -

and then the moulding step of the outsole of the second colour will be performed.

According to the method of the present invention, the number of different models of shoes can be considerably increased produced by a moulding process soles made of plastics which have portions with decorative effects, due to their particular configuration and also which can be obtained in at least three colours and for colours shades.

These and other characteristics of this invention will be better understood from the following description of an embodiment of a type of shoe in which the lower peripheral edge of the upper is embodied in the sole body, taking in consideration the accompanying drawing, in which:

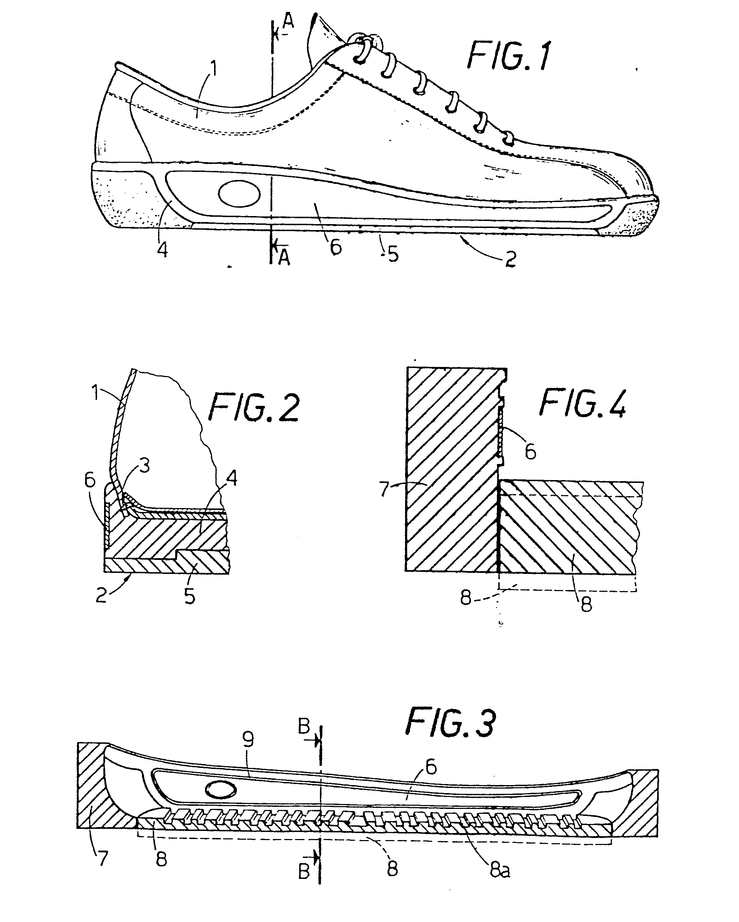

Figure 1 is a side view of a shoe performed, according to the method of this invention; Figure 2 is a fragmentary cross section taken on the line A-A of Figure 1; Figure 3 is a perspective view and a longitudinal vertical section of a mould for producing the shoe of Figure 1; and Figure 4 is the fragmentary cross section taken in the plane of the line B-B of Figure 3.

Referring to the drawing at 1 is generally indicated the upper of a shoe having a sole generally marked 2 made of plastics, said shoe 2 being of a sport-type or of casual type.

The upper 1 can be performed in any suitable manner and is sewn to an insole 3. The sole 2 of the shoe is made of plastics or other suitable elastomeric material with outer portions of at least three different colours obtained by employing the method and the mould of this invention.

In the shown embodiment provision has been foreseen that the sole 2 comprises portions of three different colours by the provision of inserted pieces made of plastics and having different colours.

According to the shown embodiment the sole 2 comprises the parts 4, 5 and 6 made of plastics of the same or similar chemical structure but having different colours and/or colour shades. For such a purpose provision is made to arrange on the inner surfaces of the mould non conventional recesses 9 (Figure 3) shaped according to the desired configuration of the pieces 6 to be inserted therein, this mould being of the conventional well known type, already used in the art for producing a shoe or a sole having two colours with the exception that no recess 9 is provided therein. Thus this mould according to the shown embodiment consists of two side identical elements 7 and of a bottom element 8, this latter carried by a piston (not shown), provided to move said bottom element 8 vertically with regard to the side elements 7 designed to shape the side portions of the sole 2 of the shoe.

Inside the recesses 9, will be inserted laminar complementary plastic pieces 6 sheared from a previously moulded laminated web made of the same plastic material, which will be employed for moulding the sole, but of a different colour.

Inside the mould 7; 8 is mounted a core or last (not shown) which, in the shown embodiment, will have such a configuration to correctly support the upper 1 with the insole 3

- 4 -

connected thereto. Then, through the injection holes will be injected the moulded plastic material designed to form the main body 4 of the sole 2 with the bottom element 8 positioned at its upper limit position as shown us Figure 3 After a time interval sufficient to permit the plastics hardening, the piston supporting the mould bottom 8 is caused to move backwards for a short length without coming out from the mould so as to define, below the lower face of the bottom element 4, a hollow space of a height of some millimeters (position of the bottom 8 shown in dotted lines in Figure 3). In this hollow space is then injected a plastic material of a different colour provided to form the outsole 5 of the sole 2 of the shoe, said material strictly adhering to the lower surface and to peripheral edges of the previously moulded part 4, as well as to the peripheral edges of the upper 1, also defining the outer antislip ribs of the outsole 5, obtained to the particular shaped grooves 8a arranged on the upper surface of the bottom element 8 of the mould. When the second moulding step has been completed, the shoe is removed from the mould together with the core and now the shoe has a upper partially embodied in the body of the sole 2 which, in this case, has parts 4, 5 and 6 of three different colours or colour shades; all the parts 6 can have the same colour or different colours or colour shades according to the colours or colour shades of the inserted pieces 6 which can also have the most various outlines or contours.

It will be neither described nor illustrated the production of a single sole having the characteristics of this

- 5 -

invention, as in this case it will be only necessary to modify the respective mould and countermould for such a different intended purpose.

Claims

1- A method for producing the sole (2) of a shoe, made of a mouldable plastic material or other suitable elastomeric materials in at least three different colours or colour shades, in which the main body (4) of the sole (2) will be performed in the first colour and the outsole (5) is made in the second colour, while on the side outer surfaces parts/are provided of at least a different colour, characterized by the fact, that these latter parts (6) are prepared by a shearing process starting from laminar webs, made of a plastic material similar to the materials used to form the main sole (4) and the outsole (5), but of a different colour or colours, the laminar pieces (6) having any desired outline or contour, and being inserted in complementary recesses arranged in the inner surface of the mould before the first moulding step in which is moulded the main body (4) of the sole (2), while the lower outsole (5) is moulded subsequently.

2- A mould for carrying out the method for preparing a shoe sole according to claim 1, and consisting of two longitudinal side mould elements (7) identical and symmetrical to one another and designed to shape the sides of the shoe sole, and of a bottom mould element (8) designed to shape the lower surface of the sole, this bottom element (8) being separated from the two side elements of the mould and being carried by a piston, adapted to perform up and down displacements of such a length as to displace the bottom element (8) with respect of the side elements (7) of the mould, which, without separating the form, characterized by the fact that on the inner side surface of the side elements (7) of the mould recesses (9) are arranged and shaped so as to receive laminated plastic pieces (6) of different colours designed to be inserted on the side portions of the sole.

3- A mould according to claim 2, wherein the side elements (7) of the mould and the counter mould are shaped, so as to produce a shoe sole.

4- A mould, according to claim 2, wherein the side elements (7) of the mould and the inner core are shaped so as to receive also the lower portion of the upper of the shoe, so as to obtain a shoe, the upper of which has its lower peripheral edge, embodied in the sole body.

*FIG.1*

*FIG.2*

*FIG.4*

*FIG.3*

## European Patent Office

# EUROPEAN SEARCH REPORT

Application number

EP 79 83 0013

| | DOCUMENTS CONSIDERED TO BE RELEVANT | | CLASSIFICATION OF THE APPLICATION (Int. Cl. ⁴) |
|---|---|---|---|
| Category | Citation of document with indication, where appropriate, of relevant passages | Relevant to claim | |
| | US - A - 4 120 477 (JUSTAMANTE)<br>* Abstract; figures 1,3,8,9 *<br><br>-- | 1 | B 29 F 1/12<br>A 43 D 65/02//<br>A 43 B 23/24 |
| | GB - A - 1 387 268 (STYLO)<br>* Page 1, lines 11-42; claims 1,2 *<br><br>-- | 1,2,4 | |
| | GB - A - 1 268 935 (BRITISH BATA)<br>* Claim 1; page 3, lines 11-31 *<br><br>-- | 1-4 | TECHNICAL FIELDS SEARCHED (Int.Cl. ⁴)<br><br>B 29 F |
| | FR - A - 2 012 913 (GIANNINI)<br>* Claim 1 *<br><br>-- | 1,2 | |
| | FR - A - 2 094 863 (BECQUET)<br>* Page 1, lines 19-22 *<br><br>-- | 1,2 | |
| A | FR - A - 2 257 237 (VIGNERON)<br>* Claims 1,2,7; figures 3,4 *<br><br>-- | 1,3,4 | CATEGORY OF CITED DOCUMENTS |
| A | DE - A - 2 122 564 (CONTINENTAL)<br>* Claim 1; figures 3,4 *<br><br>-- | 1 | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| A | US - A - 3 463 849 (WINKLER)<br><br>---- | 1 | |
| | The present search report has been drawn up for all claims | | &: member of the same patent family, corresponding document |

| Place of search | Date of completion of the search | Examiner |
|---|---|---|
| The Hague | 26-03-1980 | VERMEESCH |

EPO Form 1503.1   06.78